# EUROPÄISCHE PATENTANMELDUNG

(11) **EP 3 217 026 A1**
(43) Veröffentlichungstag der Anmeldung: **13.09.2017**
(21) Anmeldenummer: 16159173.0
(22) Anmeldetag: 08.03.2016
(51) Int. Cl.: F16B 13/00

(54) **NAPFFÖRMIGES EINLAGEELEMENT ZUM EINFASSEN EINER ANKERSTANGE**

(71) Anmelder: HILTI Aktiengesellschaft, 9494 Schaan (LI)
(72) Erfinder: Nguyen, Huu Toan, 9453 Eichberg (CH); Hakenholt, Christoph, 6800 Feldkirch (AT)
(74) Vertreter: Hilti Aktiengesellschaft Corporate Intellectual Property

(57) **Zusammenfassung**

Die Erfindung betrifft ein Ankerset aufweisend einen Anker mit einer Ankerstange sowie ein Einlageelement zum Armieren einer Mündung eines in einem mineralischen Substrat angeordneten Lochs für den Anker. Erfindungsgemäss ist vorgesehen, dass das Einlageelement eine Stützhülse zum Abstützen der Ankerstange und eine mit der Stützhülse verbundene Einsenkhülse mit einer offenen Vorderseite zum Einsenken in das mineralische Substrat und Aufnehmen eines Substratzapfens aufweist. Die Erfindung betrifft ferner ein Einlageelement für ein solches Ankerset, eine Befestigungsanordnung enthaltend ein solches Ankerset und ein Setzverfahren für ein solches Ankerset.

## Beschreibung

Die Erfindung betrifft ein Ankerset gemäss dem Oberbegriff des Anspruchs 1. Ein solches Ankerset weist auf: einen Anker mit einer Ankerstange sowie ein Einlageelement zum Armieren einer Mündung eines in einem mineralischen Substrat angeordneten Lochs für den Anker. Die Erfindung betrifft ferner ein Einlageelement für ein solches Ankerset gemäss Anspruch 12, eine Befestigungsanordnung, welche ein solches Ankerset aufweist, gemäss Anspruch 13 und ein Setzverfahren für ein solches Ankerset gemäss Anspruch 14.

Die DE 102009006207 A1 beschreibt eine Befestigungsanordnung, bei der eine Querkrafthülse, welche die Ankerstange umgibt, im Bereich der Bohrlochmündung angeordnet wird, wobei die Querkrafthülse eine verbesserte Querkrafttragfähigkeit bewirken soll. Gemäss DE 102009006207 A1 kann vorgesehen sein, dass die Querkrafthülse das Bohrloch im Bereich der Bohrlochmündung aufweitet. Insbesondere kann die Querkrafthülse zu diesem Zweck stirnseitige Schneiden aufweisen.

Die DE 20201927 U1 beschreibt einen Verbundanker, der eine Querkrafthülse aufweist, welche die Ankerstange gegen Querbelastungen im Bereich der Mündung des Lochs abstützt.

Die DE 10204591 A1 lehrt ein Verfahren zum Setzen eines Spreizankers, bei dem nach der Verankerung des Spreizankers im Loch zusätzlich Mörtel in das Loch gefüllt wird. Der ausgehärtete Mörtel soll den Spreizanker in radialer Richtung im Loch abstützen. Ein weiteres Verfahren zum Setzen eines Spreizankers, bei dem zusätzlich eine aushärtbare Masse in das Bohrloch eingebracht wird, geht aus der Europäischen Patentanmeldung mit der Anmeldenummer 15191165.8 hervor.

Aus der WO 11116918 A2 geht eine Injektions-Unterlegscheibe, die ein Mittelloch, eine Befüllöffnung und eine Entlüftungsöffnung aufweist, hervor. Diese Injektions-Unterlegscheibe kommt bei einem Verfahren zur nachträglichen Ertüchtigung eines in ein Loch eingesetzten Schwerlastankers mit einer Spreizhülse zum Einsatz. Eine weitere Unterlegscheibe mit einer Durchgangsbohrung zum Einfüllen der Mörtelmasse in das Loch ist aus der DE 10111470 A1 bekannt.

Aus der DE 19749571 A1 geht eine Ankervorrichtung zur Befestigung von dynamisch querbelasteten Gegenständen an einem Befestigungsgrund hervor. Diese Ankervorrichtung weist eine die Ankerstange umschliessende Bundbuchse auf, die nach dem Setzen der Ankervorrichtung in einen der Lochmündung benachbarten, im Durchmesser vergrösserten Bereich des Lochs hineinragt, wobei ein mit Verbundmörtel füllbarer, die Bundbuchse umschliessender Ringraum vorgesehen ist.

Aus der US 2009180831 A1 sind Ausgleichselemente mit von einer Kreisform abweichendem Querschnitt bekannt, die einen Toleranzausgleich an einem Anbauteil ermöglichen.

Aufgabe der Erfindung ist es, bei einem Anker, welcher in einem mineralischen Substrat verankert wird, bei geringem Aufwand, guter Setzbarkeit und hoher Zuverlässigkeit besonders gute Lastwerte, insbesondere bei Querbelastung des Ankers, zu erzielen.

Die Aufgabe wird durch ein Ankerset gemäss Anspruch 1, ein Einlageelement für ein solches Ankerset gemäss Anspruch 12, eine Befestigungsanordnung, welche ein solches Ankerset aufweist, gemäss Anspruch 13 und ein Setzverfahren für ein solches Ankerset gemäss Anspruch 14 gelöst. Bevorzugte Ausführungsformen sind in den abhängigen Ansprüchen angegeben.

Ein erfindungsgemässes Ankerset ist dadurch gekennzeichnet, dass das Einlageelement eine Stützhülse zum Abstützen, insbesondere Querabstützen, der Ankerstange und eine mit der Stützhülse verbundene Einsenkhülse mit einer offenen Vorderseite zum Einsenken in das mineralische Substrat und Aufnehmen eines Substratzapfens aufweist.

Die Erfindung basiert auf der Erkenntnis, dass das mineralische Substrat bei Querbelastung das schwächste Glied des Ankersystems sein kann. Beispielsweise kann es bei, insbesondere wiederholter, Querbelastung aufgrund der Wirkung der Ankerstange gegen das Substrat im Bereich der Mündung des Lochs zu einer Beschädigung des Substrats kommen, was die Tragfähigkeit des gesamten Ankersystems beeinträchtigen kann. Hier setzt die Erfindung an und sieht vor, das mineralische Substrat als das schwächste Glied im Bereich der Mündung des Lochs gezielt zu stärken, vorzugsweise so weit, dass primär nicht das Substrat versagt, sondern die Ankerstange im sogenannten Stahlbruch.

Um das Substrat um den Anker herum im Bereich der Mündung des Lochs zu stärken wird ein Einlageelement, insbesondere aus einem Metallmaterial, vorgesehen. Dieses Einlageelement hat die Aufgabe, die Mündung des Lochs so zu armieren, dass das Einlageelement die auftretenden Querlasten aufnehmen und vergleichsweise homogen und auf vergleichsweise grosser Fläche auf das Substrat übertragen kann. Spannungsspitzen, die über der Festigkeit des mineralischen Substrats liegen, können somit wirksam vermieden werden und es können entsprechend höhere Kräfte übertragen werden, bevor das Substrat versagt.

Auf diesen Erkenntnissen aufbauend schlägt die Erfindung ein Einlageelement mit zwei Hülsenbereichen vor. Zum einen weist das Einlageelement eine Stützhülse mit relativ kleinem Innenquerschnitt auf. Diese Stützhülse dient zur Aufnahme der Ankerstange mit relativ geringem Spiel und bildet nach dem Setzen des Einlageelements in der in Befestigungsanordnung eine mündungsnahe Verlängerung der Wand des im Substrat angeordneten Lochs. Somit kann die Stützhülse die Ankerstange in Querrichtung abstützen und Querkräfte aus der Ankerstange aufnehmen. Zum anderen weist das Einlageelement eine Einsenkhülse auf, welche mit der Stützhülse für eine Querkraftübertragung verbunden ist. Diese Einsenkhülse weist im Vergleich zur Stützhülse einen grösseren Innenquerschnitt auf und ist dafür vorgesehen, beim Setzen in eine ringförmige Ausnehmung im mineralischen Substrat eingesenkt zu werden, das heisst sie ist dafür vorgesehen, in der fertigen Befestigungsanordnung einen Substratzapfen, der im Inneren der ringförmigen Ausnehmung im mineralischen Substrat gebildet ist, aufzunehmen. In dieser Konfiguration wird das Einlageelement im mineralischen Substrat in zwei entgegengesetzten Richtungen abgestützt, nämlich radial nach aussen, aber auch radial nach innen, und eine Übertragung von Querlasten vom Einlageelement auf das Substrat kann in zwei beabstandeten Bereichen erfolgen, nämlich zum einen an der Aussenseite des Einlageelements auf das das Einlageelement umgebende Substrat und zum anderen auf der Innenseite der Einsenkhülse auf den im Inneren der Einsenkhülse befindlichen Substratzapfen. Diese Verdoppelung des Übertragungswegs kann dem Auftreten von überhöhten Spannungsspitzen am Substrat besonders wirksam entgegenwirken, so dass in besonders einfacher Weise besonders hohe Lastwerte, insbesondere bei dynamischer Querbelastung, erhalten werden können.

Insbesondere kann das Einlageelement nach der Erfindung eine topfartige Form aufweisen, wobei die Topfwand von der Einsenkhülse gebildet wird und die Stützhülse an einer Durchgangsöffnung im Topfboden gebildet ist. Die Verbindung von Stützhülse und Einsenkhülse kann durch ein ununterbrochenes Element gebildet sein, beispielsweise durch den Topfboden. Es kann jedoch ausreichen und in vielen Fällen auch vorteilhaft sein, wenn die Stützhülse und die Einsenkhülse durch mehrere Speichen verbunden sind, die zwischen der Stützhülse und der Einsenkhülse verlaufen. Die zwischen diesen Speichen gebildeten Ausnehmungen können dann zum Abführen von abgearbeitetem Substrat oder/und für eine drehfeste Kopplung mit einem Setzwerkzeug dienen.

Die Einsenkhülse und die Stützhülse können zwei separate Teile sein. Besonders bevorzugt ist es jedoch, dass die Einsenkhülse und die Stützhülse monolithisch ausgeführt sind, wobei monolithisch im fachüblichen Sinne insbesondere beinhalten kann, dass die beiden Hülsen ohne Fügestelle zusammenhängen. Eine monolithische Ausführung kann eine besonders einfache Fertigung und darüber hinaus eine besonders zuverlässige Übertragung besonders hoher Kräfte ermöglichen. Insbesondere bei einer monolithischen Ausführung können die Einsenkhülse und die Stützhülse auch ineinander übergehen. Die beiden Hülsen können dann beispielsweise eine gemeinsame, zum Beispiel zylindrische, Aussenoberfläche aufweisen und sich lediglich durch bereichsweise unterschiedliche Innenquerschnitte unterscheiden.

Das erfindungsgemässe Einlageelement dient zum Armieren der Mündung des im mineralischen Substrat angeordneten Lochs. Der Umstand, dass die Mündung mit dem Einlageelement armiert ist, kann insbesondere beinhalten, dass das Substrat im Bereich der Mündung, vorzugsweise im Inneren des Lochs, vom Einlageelement, nämlich von dessen Stützhülse, bedeckt ist, so dass eine im Bereich der Mündung aufgrund von Querkraftwirkung radial versetzte Ankerstange nicht unmittelbar am mineralischen Substrat anschlägt, sondern lediglich mittelbar auf das mineralische Substrat wirkt, nämlich über das Einlageelement hinweg. Mit anderen Worten wird bei armierter Mündung die Wand des Lochs im Bereich der Mündung nicht durch das mineralische Substrat, sondern durch das Einlageelement gebildet, insbesondere durch dessen Stützhülse. Das erfindungsgemässe Einlageelement kann im gesetzten Zustand, das heisst in einer erfindungsgemässen Befestigungsanordnung, ein Querkraftaufnahmeelement bilden, welches Querkräfte der Ankerstange aufnehmen und an das mineralische Substrat übertragen kann. Unter der Mündung kann in fachüblicher Weise insbesondere der aussenseitige Endbereich des Lochs verstanden werden. Die Armierung der Mündung des Lochs kann insbesondere lochinnenseitig gegeben sein.

Die Einsenkhülse ist erfindungsgemäss mit einer offenen Vorderseite ausgebildet. Die Einsenkhülse ist zum Einsenken in das mineralische Substrat und Aufnehmen eines Substratzapfens vorgesehen. Der Vorgang des Einsenkens kann insbesondere beinhalten, dass die Einsenkhülse in einer Vertiefung des Substrats angeordnet wird, insbesondere in einer ringförmigen Vertiefung. Auch die Stützhülse kann in das mineralischen Substrats eingesenkt werden, insbesondere dann, wenn die Armierung der Mündung des Lochs lochinnenseitig gegeben sein soll. Im Falle der Stützhülse kann die Vertiefung, in welcher die Stützhülse beim Einsenken angeordnet wird, insbesondere eine mündungsseitige Aufweiterung des Lochs im mineralischen Substrat sein.

Die Stützhülse weist eine Durchgangsöffnung für die Ankerstange auf und die Einsenkhülse eine Aufnahme für den Substratzapfen, wobei die Stützhülse einen kleineren Innenquerschnitt aufweist als die Einsenkhülse, das heisst die Durchgangsöffnung ist querschnittskleiner als die Aufnahme für den Substratzapfen. Bei gesetztem Anker und gesetztem Einlageelement, das heisst in einer erfindungsgemässen Befestigungsanordnung, ist die Ankerstange bereichsweise im Loch des Substrats aufgenommen. Die Ankerstange tritt dabei durch die Durchgangsöffnung in der Stützhülse hindurch in den Substratzapfen ein. Die Stützhülse und die Einsenkhülse sind insbesondere miteinander fluchtend angeordnet, das heisst die im Inneren der Stützhülse angeordnete Durchgangsöffnung geht in die im Inneren der Einsenkhülse angeordnete Aufnahme über. Die Durchgangsöffnung für die Ankerstange in der Stützhülse kann insbesondere einen zylindrischen Querschnitt aufweisen. Die Durchgangsöffnung kann zweckmässigerweise einen Durchmesser aufweisen, der maximal 10% oder 20% grösser ist als der Durchmesser der hierin angeordneten Ankerstange. Insbesondere kann die Stützhülse einen Ring bilden, welcher die Durchgangsöffnung für die Ankerstange und somit die gegebenenfalls in der Durchgangsöffnung angeordnete Ankerstange umgibt, und zwar vorzugsweise einen geschlossenen Ring, was einen besonders gleichmässigen Kraftfluss bewirken kann. Alternativ oder zusätzlich kann auch die Einsenkhülse vorzugsweise einen geschlossenen Ring bilden, was einen besonders gleichmässigen Kraftfluss bewirken kann.

Das Einlageelement weist eine Vorderseite und eine der Vorderseite entgegengesetzte Rückseite auf, wobei die Vorderseite zum Einsenken in das Substrat dient. In der fertigen Befestigungsanordnung ist somit die Vorderseite dem Substrat zugewandt und/oder die Rückseite einem Anbauteil zugewandt. Die Einsenkhülse ist vorderseitig offen, damit beim Setzvorgang der Substratzapfen durch die entsprechende Öffnung hindurch in das Innere der Einsenkhülse treten kann. Erforderlichenfalls kann die offene Vorderseite temporär durch eine separate Schutzkappe, welche die entsprechende Öffnung vor dem Setzen verschliesst, oder eine Membran, welche beim Setzen vom Substratzapfen durchstossen wird, verschlossen werden. Vorzugsweise kann das Einlageelement an der Vorderseite und an der Rückseite jeweils eine Stirnseite aufweisen, wobei diese Stirnseiten in besonders bevorzugter Weise parallel zueinander verlaufen können.

Das Einlageelement ist zweckmässigerweise zumindest annähernd ein Rotationskörper, was insbesondere dann vorteilhaft ist, wenn sich das Einlageelement selbst in das Substrat einschneidet. Grundsätzlich könnte aber auch eine unrunde Form des Einlageelements vorgesehen sein. Vorzugsweise weist das Einlageelement eine Längsachse auf, welche insbesondere durch die Stützhülse hindurchläuft ohne diese zu schneiden und/oder durch die Einsenkhülse hindurchläuft ohne diese zu schneiden. Die Stützhülse und die Einsenkhülse sind vorzugsweise koaxial zueinander und/oder koaxial zur Längsachse des Einlageelements angeordnet. Die Einsenkhülse ist zweckmässigerweise gegenüber der Stützhülse nach vorne hin versetzt angeordnet, das heisst zur offenen Vorderseite der Einsenkhülse hin versetzt angeordnet. Hierdurch ist ein, bezogen auf die Längsachse, axialer Versatz von Einsenkhülse und Stützhülse gegeben.

Das mineralische Substrat besteht aus einem mineralischen Baustoff, vorzugsweise aus Beton. Vorzugsweise kann es sich bei dem mineralischen Substrat also um ein Betonsubstrat handeln, da das Lastverhalten bei Querlasten, welches erfindungsgemäss verbessert wird, insbesondere im Zusammenhang mit Betonsubstraten wesentlich sein kann.

Der Anker weist zweckmässigerweise zumindest einen Verankerungsbereich auf, welcher zum Verankern der Ankerstange an einer Wand des im mineralischen Substrat vorgesehenen Lochs dient. Der Anker kann vorzugsweise ein mechanischer Anker sein, das heisst ein Anker, bei dem die Verankerung auf mechanischem Wege erfolgt, und bei dem der Verankerungsbereich ein mechanischer Verankerungsbereich ist. Der Anker kann beispielsweise ein Spreizanker sein. Ein solcher Spreizanker kann vorzugsweise zumindest einen Spreizkörper aufweisen, insbesondere eine Spreizhülse, welcher von einer im Verankerungsbereich an der Ankerstange angeordneten Schrägfläche, insbesondere einem Spreizkonus, radial nach aussen gedrängt wird, wenn die Ankerstange axial relativ zum Spreizkörper versetzt wird.

Besonders vorteilhaft ist es, dass die Einsenkhülse und die Stützhülse in einem der offenen Vorderseite der Einsenkhülse abgewandten rückwärtigen Bereich der Einsenkhülse miteinander verbunden sind. Hierdurch kann die Form der Vertiefung im mineralischen Substrat, in welcher die Einsenkhülse eingebracht wird, besonders einfach gehalten werden, was den Setzaufwand weiter reduzieren kann. Insbesondere kann vorgesehen werden, dass sich der rückwärtige Bereich, in welchem die Verbindung besteht, über maximal 25% der gesamten Höhe des Einlageelements erstreckt.

Eine andere vorteilhafte Ausgestaltung liegt darin, dass die Wandstärke der Einsenkhülse zur offenen Vorderseite der Einsenkhülse hin, das heisst zur Vorderseite des Einlageelements hin, abnimmt. Demgemäss nimmt die Wandstärke der Einsenkhülse nach hinten hin, das heisst mit zunehmendem Abstand von der offenen Vorderseite, zu, wobei die Wandstärke insbesondere senkrecht zur Längsachse des Einlageelements gemessen werden kann. Durch diese Ausführungsform kann einerseits die Setzbarkeit des Einlageelements noch weiter verbessert werden, weil das Einlageelement dort, wo es in das mineralische Substrat eindringt, relativ schmal ist. Darüber hinaus kann die Kraftübertragung noch weiter verbessert werden, zum einen weil dort, wo die Verbindung zwischen Einsenkhülse und Stützhülse besteht, eine relativ hohe Wandstärke gegeben ist, zum anderen weil die aus einer solchen Struktur resultierende Aufnahme für den Substratzapfen und somit der hiermit korrespondierende Substratzapfen selbst für eine Lastübertragung besonders gut geeignet sind. Die Wandstärke der Einsenkhülse kann nach hinten hin so weit zunehmen, dass sich die hierin gebildete Aufnahme für den Substratzapfen stetig an die Durchgangsöffnung der Stützhülse anschliesst. Insbesondere kann die Aufnahme für den Substratzapfen domförmig ausgebildet sein. Besonders vorteilhaft ist es, dass die Wandstärke der Einsenkhülse in einem Abschnitt, dessen Höhe mindestens 50% der Höhe der Einsenkhülse oder der Höhe des Einlageelements beträgt, kontinuierlich zur offenen Vorderseite hin abnimmt. Demgemäss erstreckt sich die Wandstärkenabnahme über einen relativ grossen Höhenbereich, was im Hinblick auf den Kraftfluss vorteilhaft sein kann.

Insbesondere kann der Aussenquerschnitt der Einsenkhülse zumindest annähernd konstant sein. Die zuvor beschriebene Abnahme der Wandstärke der Einsenkhülse zur offenen Vorderseite der Einsenkhülse hin kann in diesem Fall mit einer Zunahme des Innenquerschnitts der Einsenkhülse zur offenen Vorderseite der Einsenkhülse hin einhergehen.

Dass der Innenquerschnitt der Einsenkhülse zur offenen Vorderseite der Einsenkhülse hin zunimmt stellt eine weitere bevorzugte Ausgestaltung der Erfindung dar. Demgemäss kann der Querschnitt der Aufnahme für den Substratzapfen zur offenen Vorderseite der Einsenkhülse hin zunehmen. Dies kann im Hinblick auf die Form des korrespondierenden Substratzapfens vorteilhaft sein und den Kraftfluss zwischen Einlageelement und Substrat noch weiter verbessern. Besonders vorteilhaft ist es, dass der Innenquerschnitt der Einsenkhülse und somit der Querschnitt der Aufnahme für den Substratzapfen in einem Abschnitt, dessen Höhe mindestens 50% der Höhe der Einsenkhülse oder des Einlageelements beträgt, kontinuierlich zur offenen Vorderseite hin zunimmt. Demgemäss erstreckt sich die Querschnittszunahme über einen relativ grossen Bereich, was im Hinblick auf den Kraftfluss vorteilhaft sein kann.

Besonders bevorzugt ist es, dass die Wandstärke der Einsenkhülse unmittelbar im Anschluss an die vordere Stirnseite des Einlageelements ein, vorzugsweise globales, Minimum aufweist, was vorzugsweise heisst, dass die Einsenkhülse unmittelbar im Anschluss an die vordere Stirnseite am schmälsten ist. Weiterhin ist es besonders bevorzugt, dass der Querschnitt der Aufnahme für den Substratzapfen unmittelbar im Anschluss an die vordere Stirnseite des Einlageelements ein, vorzugsweise globales, Maximum aufweist. Zweckmässigerweise kann die Wandstärke längs der Einsenkhülse um mindestens 10% oder um mindestens 20% abnehmen, das heisst die Wandstärke ist in einem vorderen Bereich der Einsenkhülse um mindestens 10% beziehungsweise 20% kleiner als in einem weiter hinten liegenden Bereich der Einsenkhülse. Zweckmässigerweise kann der Querschnitt der Aufnahme für den Substratzapfen längs der Einsenkhülse um mindestens 20% oder um mindestens 40% zunehmen, das heisst der Querschnitt der Aufnahme für den Substratzapfen ist in einem vorderen Bereich der Einsenkhülse um mindestens 20% beziehungsweise 40% grösser als in einem weiter hinten liegenden Bereich der Einsenkhülse. Die Einsenkhülse weist vorzugsweise eine Höhe auf, die mindestens 20%, vorzugsweise mindestens 30% der Höhe h des gesamten Einlageelements beträgt.

Weiterhin ist es besonders vorteilhaft, dass die Einsenkhülse eine im Längsschnitt des Einlageelements konkave Innenoberfläche aufweist. Demgemäss können die im Inneren der Einsenkhülse angeordnete Aufnahme für den Substratzapfen und der korrespondierende Substratzapfen eine konvexe, insbesondere konvexkeglige Oberfläche aufweisen. Vorzugsweise nimmt die Neigung der Innenoberfläche der Einsenkhülse bezüglich der Längsachse mit zunehmendem Abstand von der offenen Vorderseite hin zu. Hierdurch kann die Lasteinleitung und Lastübertragung noch weiter verbessert werden. In fachüblicher Weise kann unter einem Längsschnitt insbesondere ein Schnitt in einer Schnittebene verstanden werden, welche parallel zur Längsachse des Einlageelements verläuft und vorzugsweise die Längsachse umfasst.

Vorzugsweise kann das Einlageelement eine, insbesondere ebene, vordere Stirnseite und/oder eine, insbesondere ebene, rückwärtige Stirnseite aufweisen. Die vordere Stirnseite ist vorzugsweise an der Einsenkhülse und/oder die rückwärtige Stirnseite vorzugsweise an der Stützhülse gebildet.

Grundsätzlich kann vorgesehen sein, dass das Einlageelement beim Einsenken in eine Vertiefung eingebracht wird, die vorab mit einem separaten Senkwerkzeug erzeugt worden ist. Besonders bevorzugt ist es jedoch, dass das Einlageelement die Vertiefung, in welche das Einlageelement eingesenkt wird, das heisst insbesondere die ringförmige Ausnehmung, zumindest teilweise, vorzugsweise vollständig, selbst erzeugt. Insbesondere kann also das Einlageelement auch als Bohrer zum Bohren der Vertiefung dienen. Hierdurch kann der Setzvorgang weiter vereinfacht und beschleunigt werden. Insbesondere vor diesem Hintergrund kann es vorteilhaft sein, dass das Einlageelement zumindest eine Schneide zum Schneiden des mineralischen Substrats aufweist. Eine solche Schneide erlaubt ein besonders einfaches und zuverlässiges Erstellen der Vertiefung im mineralischen Substrat. Insbesondere kann zumindest eine Schneide im Inneren der Einsenkhülse vorgesehen sein, das heisst insbesondere an deren Innenoberfläche. Besonders bevorzugt ist es, dass zumindest eine weitere Schneide an einer vorderen Stirnseite des Einlageelements angeordnet ist. Die im Inneren der Einsenkhülse angeordnete Schneide kann in besonders bevorzugter Weise nicht-parallel zur Längsachse des Einlageelements verlaufen, was die Abführung von abgearbeitetem mineralischem Substrat unterstützen kann. Zweckmässigerweise können im Inneren der Einsenkhülse und vorzugsweise auch an der vorderen Stirnseite jeweils mehrere Schneiden angeordnet sein.

Zweckmässigerweise kann das Einlageelement eine zylindrische, insbesondere kreiszylindrische, Aussenoberfläche aufweisen. Dies kann den Setzvorgang noch weiter vereinfachen, insbesondere dann, wenn die Vertiefung für die Einsenkhülse nicht durch ein separates Bohrwerkzeug, sondern vom Einlageelement als Bohrer erzeugt wird.

Eine andere zweckmässige Weiterbildung der Erfindung liegt darin, dass das Einlageelement zumindest einen Abführdurchgang zum Abführen von abgearbeitetem mineralischem Substrat aus der Einsenkhülse aufweist. Ein solcher Abführdurchgang kann insbesondere in der Stützhülse und/oder im Boden der topfförmigen Struktur des Einlageelements vorgesehen werden. Mittels eines Abführdurchgangs kann in besonders einfacher Weise eine besonders zuverlässige Abführung des abgearbeiteten mineralischen Substrats erreicht werden, welches beim Einbohren des Einlageelements in das mineralische Substrat anfällt. Zweckmässigerweise sind mehrere Abführdurchgänge für abgearbeitetes mineralisches Substrat vorgesehen.

Eine weitere vorteilhafte Ausgestaltung der Erfindung liegt darin, dass das Einlageelement zumindest eine Drehkupplung zur drehfesten Kopplung des Einlageelements mit einem Setzwerkzeug aufweist. Insbesondere kann die Drehkupplung zum Aufbringen eines parallel zur Längsachse des Einlageelements gerichteten Drehmoments auf das Einlageelement dienen. Mittels einer solchen Drehkupplung kann das Einlageelement in besonders einfacher und zuverlässiger Weise zum Erstellen der Vertiefung in Drehung versetzt werden. Insbesondere kann die Drehkupplung durch eine oder mehrere Ausnehmungen im Einlageelement gebildet werden, was im Hinblick auf den Materialaufwand und die Fertigung des Einlageelements vorteilhaft sein kann. Durch die eine oder mehrere Ausnehmungen im Einlageelement, welche die Drehkupplung bilden, kann ein Querschnitt, der von einer Kreisform abweicht, und somit zumindest eine Schlüsselfläche gebildet werden. Die eine oder mehrere Ausnehmungen im Einlageelement kann beziehungsweise können in die Durchgangsöffnung für die Ankerstange übergehen, müssen dies aber nicht. Die eine oder mehrere Ausnehmungen im Einlageelement kann beziehungsweise können vorzugsweise auch als Abführdurchgang beziehungsweise Abführdurchgänge für abgearbeitetes mineralisches Substrat dienen.

Weiterhin ist es vorteilhaft, dass der Aussendurchmesser des Einlageelements grösser ist als seine Höhe. Hierdurch kann einerseits ein besonders gutes Lastverhalten und andererseits ein besonders gutes Setzverhalten erhalten werden, da der relativ grosse Aussendurchmesser für einen geringen Druck auf das Substrat sorgen kann, und da die relativ geringe Höhe das Risiko von Treffern von Bewehrungseisen beim Setzen reduziert. In fachüblicher Weise kann die Höhe des Einlageelements insbesondere parallel zur Längsachse des Einlageelements gemessen werden und der Aussendurchmesser des Einlageelements kann senkrecht zur Höhe und/oder senkrecht zur Längsachse des Einlageelements, das heisst in einer Querschnittsebene des Einlageelements, gemessen werden. Die Längsachse des Einlageelements kann insbesondere von der Einsenkhülse und/oder der Einsenkhülse definiert werden.

Das Einlageelement besteht insbesondere aus einem Material, welches sich vom mineralischen Substrat unterscheidet. Besonders vorteilhaft ist es, dass das Einlageelement, zumindest überwiegend, aus einem Metallmaterial besteht. Ein solches Metallmaterial, insbesondere Stahl, kann die im Betrieb auftretenden Kräfte besonders gut übertragen ohne selbst zu versagen. Auf dem Einlageelement können auch eine oder mehrere Beschichtungen, beispielsweise eine Korrosionsschutzschicht oder/und eine reibungsbeeinflussende Schicht, vorgesehen sein. Darüber hinaus können auf dem Einlageelement auch ein oder mehrere beim Setzvorgang abreissende Körper angeordnet werden, um die Funktionalität noch weiter zu verbessern.

Die Ankerstange kann ebenfalls, zumindest überwiegend, aus einem Metallmaterial bestehen, insbesondere aus Stahl.

Das Ankerset kann, insbesondere vor seinem Setzvorgang, in einer gemeinsamen Verpackung angeordnet sein. Nach seinem Setzvorgang kann das Ankerset mit dem mineralischen Substrat verbunden sein. Insbesondere umfasst die Erfindung das Ankerset in seinem gesetzten Zustand. Demgemäss kann vorgesehen sein, dass die Ankerstange durch die Stützhülse hindurchgeführt ist.

Die Erfindung betrifft auch das Einlageelement eines erfindungsgemässen Ankersets für sich betrachtet, also ohne den zugehörigen Anker.

Die Erfindung umfasst ferner auch das Ankerset in Kombination mit dem mineralischen Substrat, in welchem der Anker verankert und das Einlageelement eingesenkt ist. Insbesondere umfasst die Erfindung somit eine Befestigungsanordnung aufweisend ein erfindungsgemässes Ankerset und ein mineralisches Substrat, welches ein Loch mit einer Mündung aufweist, wobei die Ankerstange im Loch angeordnet und im Loch verankert ist, und wobei das Einlageelement zumindest teilweise im mineralischen Substrat eingesenkt ist und das Einlageelement dabei die Mündung des Lochs armiert. Insbesondere wird in diesem Zustand die Stützhülse von der Ankerstange derart durchlaufen, dass die Ankerstange bei Querbelastung auf die Stützhülse und somit das Einlageelement wirken kann, was vorzugsweise beinhalten kann, dass die in der Durchgangsöffnung der Stützhülse angeordnete Ankerstange der Stützhülse gegenüberliegt und/oder dass die Stützhülse die hierin angeordnete Ankerstange mit allenfalls geringfügigem Spiel einfasst.

Dass das Einlageelement zumindest teilweise im mineralischen Substrat eingesenkt ist, kann vorzugsweise beinhalten, dass zumindest die Einsenkhülse und/oder die vordere Stirnseite des Einlageelements gegenüber dem Niveau der das Einlageelement umgebenden Substratoberfläche in das Innere des Substrats zurückversetzt ist. Sofern das Einlageelement lediglich teilweise im mineralischen Substrat eingesenkt ist, kann es auch Querlasten eines am Anker angeordneten Anbauteils unmittelbar in das mineralische Substrat übertragen.

Das Einlageelement kann jedoch auch vollständig im mineralischen Substrat eingesenkt sein, was insbesondere beinhalten kann, dass auch die rückwärtige Stirnseite des Einlageelements gegenüber dem Niveau der das Einlageelement umgebenden Substratoberfläche in das Innere des Substrats zurückversetzt ist, oder dass die rückwärtige Stirnseite zumindest bündig mit dem Niveau der das Einlageelement umgebenden Substratoberfläche ist. Die damit einhergehende Entkopplung von Anbauteil und Einlageelement kann im Hinblick auf die Lasteinleitung, aber auch im Hinblick auf die Einsatzvielfalt vorteilhaft sein.

Die Erfindung betrifft auch den bestimmungsgemässen Gebrauch des erfindungsgemässen Ankersets. Insbesondere betrifft die Erfindung ein Setzverfahren für ein erfindungsgemässes Ankerset, bei dem in einem mineralischen Substrat ein Loch mit einer Mündung vorgesehen wird, im mineralischen Substrat eine ringförmige Ausnehmung vorgesehen wird, die Einsenkhülse des Einlageelements zumindest bereichsweise in der ringförmigen Ausnehmung angeordnet wird und die Stützhülse des Einlageelements an der Mündung des Lochs angeordnet wird, so dass die Stützhülse des Einlageelements die Mündung des Lochs armiert, und die Ankerstange in das Loch eingeführt und im Loch verankert wird. In dem hierbei erhaltenen Zustand kann das Einlageelement zur Übertragung von Querlasten von der Ankerstange in das mineralische Substrat dienen. Im erfindungsgemässen Setzverfahren kann eine erfindungsgemässe Befestigungsanordnung erhalten werden. Das Loch im Substrat kann ein Bohrloch sein, grundsätzlich kann es aber auch in einem alternativen Verfahren hergestellt werden. Die ringförmige Ausnehmung wird zweckmässigerweise so angeordnet, dass sie das Loch umgibt, insbesondere koaxial. Typischerweise kann das Loch eine grössere Tiefe im Substrat aufweisen als die ringförmige Ausnehmung. Die ringförmige Ausnehmung bildet vorzugsweise einen geschlossenen Ring, was den Setzvorgang vereinfacht.

Besonders bevorzugt ist es, dass zunächst die Ankerstange in das Loch eingeführt wird und anschliessend die Einsenkhülse des Einlageelements zumindest bereichsweise in der ringförmigen Ausnehmung angeordnet wird. Demgemäss kann also das Einlageelement auf die Ankerstange aufgesteckt werden, nachdem die Ankerstange im Loch angeordnet wurde. Gemäss dieser Ausführungsform kann die Ankerstange zur Führung des Einlageelements dienen, was den Setzvorgang noch weiter vereinfachen kann und die Zuverlässigkeit der resultierenden Befestigungsanordnung noch weiter verbessern kann. Vorzugsweise kann die Ankerstange auch im Loch vorverankert werden, bevor das Einlageelement auf die Ankerstange aufgesteckt wird und/oder die Einsenkhülse in der ringförmigen Ausnehmung angeordnet wird.

Insbesondere kann in vorteilhafter Weise zumindest ein Teilbereich der ringförmigen Ausnehmung durch Eindrehen des Einlageelements, vorzugsweise des auf die Ankerstange aufgesteckten Einlageelements, in das Substrat erzeugt werden. Demgemäss wirkt das Einlageelement als Bohrwerkzeug, welches die ringförmige Ausnehmung während des Einsenkens selbst erstellt, und dabei insbesondere den Substratzapfen, der in der Aufnahme der Einsenkhülse angeordnet wird, freistellt. Hierdurch kann das Setzverfahren weiter vereinfacht werden und ein besonders guter Kontakt zwischen Einlageelement und Substrat erhalten werden. Sofern das Einlageelements beim Eindrehen auf die Ankerstange aufgesteckt ist, kann die Ankerstange in besonders einfacher Weise zur Führung des Einlageelements dienen.

Das erfindungsgemässe Einlageelement ist insbesondere so ausgelegt, dass es nicht den kompletten Innenraum leer räumt. Vielmehr bleibt in seiner Mitte ein Teil des Substrats stehen und bildet den Substratzapfen. Die Stützhülse kann eine relativ grosse Wandstärke aufweisen, welche insbesondere grösser als die Wandstärke der Einsenkhülse und/oder als der Durchmesser der Durchgangsöffnung in der Stützhülse sein kann. Der Abführdurchgang kann sich parallel zur Durchgangsöffnung in der Wand der Stützhülse erstrecken, wobei sowohl die Durchgangsöffnung als auch der Abführdurchgang einen rückwärtigen Zugang in die Aufnahme der Einsenkhülse bilden können.

Merkmale, die im Zusammenhang mit dem erfindungsgemässen Aspekt Ankerset, Einlageelement, Befestigungsanordnung oder Setzverfahren erläutert werden, sind nicht auf diesen Aspekt beschränkt, sondern können auch bei einem oder mehreren der jeweils anderen erfindungsgemässen Aspekte Ankerset, Einlageelement, Befestigungsanordnung oder Setzverfahren zum Einsatz kommen.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figuren 1 bis 5 :: aufeinanderfolgende Stadien bei der Durchführung eines Verfahrens zum Setzen eines Ankersets, jeweils im Längsschnitt;
- Figur 6:: eine perspektivische Ansicht des Einlageelements des Ankersets, welches bei der Durchführung des Verfahrens gemäss Figuren 1 bis 5 verwendet wird;
- Figur 7:: das Einlageelement aus Figur 6 von hinten;
- Figur 8:: das Einlageelement aus Figuren 6 und 7 in Längsschnittsansicht A-A gemäss Figur 7;
- Figur 9:: eine Ansicht eines zweiten Ausführungsbeispiels eines Einlageelements für ein Ankerset von oben; und
- Figur 10:: das Einlageelement aus Figur 9 in Längsschnittsansicht, analog Figur 8.

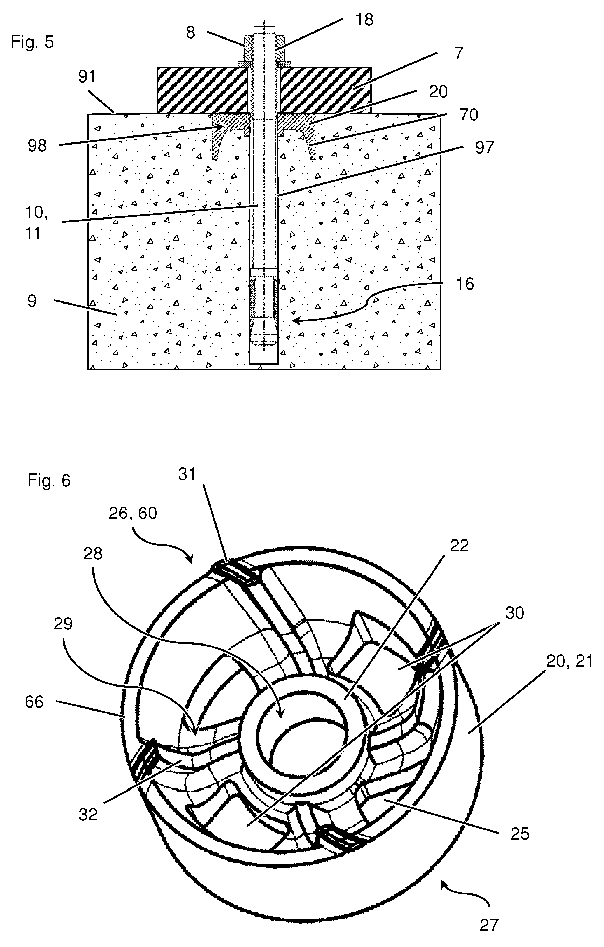

Ein erstes Ausführungsbeispiel eines erfindungsgemässen Einlageelements 20 für ein erfindungsgemässes Ankerset zur Verwendung in einem erfindungsgemässen Setzverfahren ist in den Figuren 6 bis 8 dargestellt. Das Einlageelement 20 ist im Wesentlichen rotationssymmetrisch um eine Längsachse 99 herum und ausgebildet. Es weist eine Vorderseite 26 mit einer vorderen Stirnseite 66 und entgegengesetzt hierzu eine Rückseite 27 mit einer rückwärtigen Stirnseite 67 auf.

Das Einlageelement 20 weist in einem rückwärtigen Bereich eine Stützhülse 22 auf, innerhalb derer eine zylindrische Durchgangsöffnung 28 für eine Ankerstange 11 eines weiter unten im Detail erläuterten Ankers 10 angeordnet ist. Das Einlageelement 20 weist ferner eine Einsenkhülse 21, welche gegenüber der Stützhülse 22 zumindest teilweise nach vorne versetzt ist, und innerhalb derer eine Aufnahme 29 für einen Substratzapfen angeordnet ist. Die Durchgangsöffnung 28 und die Aufnahme 29 sind vorzugsweise koaxial mit der Längsachse 99 angeordnet, und die Durchgangsöffnung 28 geht in die Aufnahme 29 über. Die Aufnahme 29 für einen Substratzapfen ist im Wesentlichen rotationssymmetrisch und/oder querschnittsgrösser als die Durchgangsöffnung 28 ausgeführt.

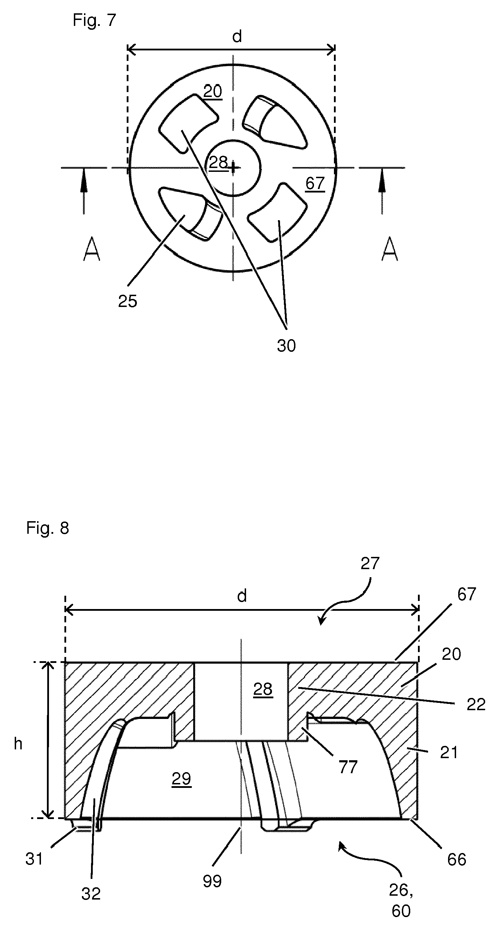

Das Einlageelement 20 weist eine offene Vorderseite 60 auf, an welcher die Aufnahme 29 der Einsenkhülse 21 von vorne zugänglich ist. Hinter der Aufnahme 29, in einem der offenen Vorderseite 60 entgegengesetzten rückwärtigen Bereich des Einlageelements 20, welcher in Figur 8 oben liegt, sind die Einsenkhülse 21 und die Stützhülse 22 miteinander verbunden, so dass eine Übertragung von quer zur Längsachse 99 gerichteten Kräften zwischen der Stützhülse 22 und der Einsenkhülse 21 möglich ist.

In der dargestellten Ausführungsform sind die Einsenkhülse 21 und die Stützhülse 22 monolithisch ausgebildet. Die Einsenkhülse 21 und die Stützhülse 22 gehen somit ineinander über. In der dargestellten Ausführungsform weisen die Einsenkhülse 21 und die Stützhülse 22 eine gemeinsame zylindrische Aussenoberfläche auf, welche die Mantelfläche des Einlageelements 20 bildet.

Die rückwärtige Stirnseite 67 des Einlageelements 20, welche insbesondere durch die Wand der Stützhülse 22 gebildet werden kann, ist im Wesentlichen eben ausgebildet und verläuft senkrecht zur gemeinsamen zylindrische Aussenoberfläche beziehungsweise der Mantelfläche des Einlageelements 20, und somit senkrecht zur Längsachse 99. In der rückwärtige Stirnseite 67 sind, beispielhaft zwei, Abführdurchgänge 25 zum Abführen von abgearbeitetem mineralische Substrat aus der Aufnahme 29 der Einsenkhülse 21 heraus nach hinten vorgesehen. Diese Abführdurchgänge 25 führen aus der Aufnahme 29 durch die Wand der Stützhülse 22 hindurch auf die Aussenseite des Einlageelements 20.

Das Einlageelement 20 weist ferner an seiner Rückseite 27 eine Drehkupplung 30 zum drehfesten Koppeln des Einlageelements 20 mit einem Setzwerkzeug für eine Drehung des Einlageelements 20 um seine Längsachse 99 auf. Im dargestellten Ausführungsbeispiel ist die Drehkupplung 30 durch zwei Ausnehmungen in der rückwärtigen Stirnseite 67 des Einlageelements 20 ausgeführt, die jeweils zwischen den Abführdurchgängen 25 angeordnet sind.

Das Einlageelement 20 ist topfförmig ausgebildet, wobei die Topfwand durch die Einsenkhülse 21 gebildet ist und wobei die relativ dicke Wand der Stützhülse 22 den Topfboden bildet. In der dargestellten Ausführungsform weist die Stützhülse 22 einen dünnen Kragen 77 auf, der ein Stück weit in die Aufnahme 29 der Einsenkhülse 21 hineinragt.

Die vordere Stirnseite 66 des Einlageelements 20 bildet einen Ring, welcher die offene Vorderseite 60 der Einsenkhülse 21 umläuft. In der dargestellten Ausführungsform ist die vordere Stirnseite 66 des Einlageelements 20 im Wesentlichen eben ausgebildet und bildet somit einen Kreisring.

Wie insbesondere in Figur 8 erkennbar ist, nimmt die Wandstärke der Einsenkhülse 21 ausgehend von der vorderen Stirnseite 66 nach hinten hin zu, und dies kontinuierlich und insbesondere entlang im Wesentlichen der gesamten Höhe der Einsenkhülse 21. Mit zunehmendem Abstand von der vorderen Stirnseite 66 steigt die Wandstärkendifferenz pro Höhendifferenz an. Da der Aussenquerschnitt der Einsenkhülse 21 entlang ihrer Höhe im Wesentlichen gleichbleibend ist, ergibt sich hieraus ein konvexer Längsschnitt der Innenoberfläche der Einsenkhülse 21 und ein konkaver Längsschnitt der Aufnahme 29 für den Substratzapfen.

Wie insbesondere Figur 8 zeigt, ist das Einlageelement 20 so bemessen, dass der Aussendurchmesser d des Einlageelements 20 grösser ist als die Höhe h des Einlageelements 20, wobei die Höhe h insbesondere in Richtung der Längsachse 99 des Einlageelements 20 gemessen wird und der Aussendurchmesser d senkrecht hierzu.

Das Einlageelement 20 weist ferner Schneiden 31 und 32 zum Abarbeiten von anstehendem mineralischem Substrat auf. Dabei sind beispielhaft vier Schneiden 32 innenseitig in der Einsenkhülse 21, das heisst in die Aufnahme 29 für den Substratzapfen hineinragend, und beispielhaft vier weitere Schneiden 31 an der vorderen Stirnseite 66 vorgesehen. Insbesondere können sich die Schneiden 31 der vorderen Stirnseite 66 an die innenliegenden Schneiden 32 anschliessen. Die Schneiden 32 im Inneren der Einsenkhülse 21 sind nicht-parallel und leicht geneigt bezogen auf die Längsachse 99 des Einlageelements 20 ausgebildet.

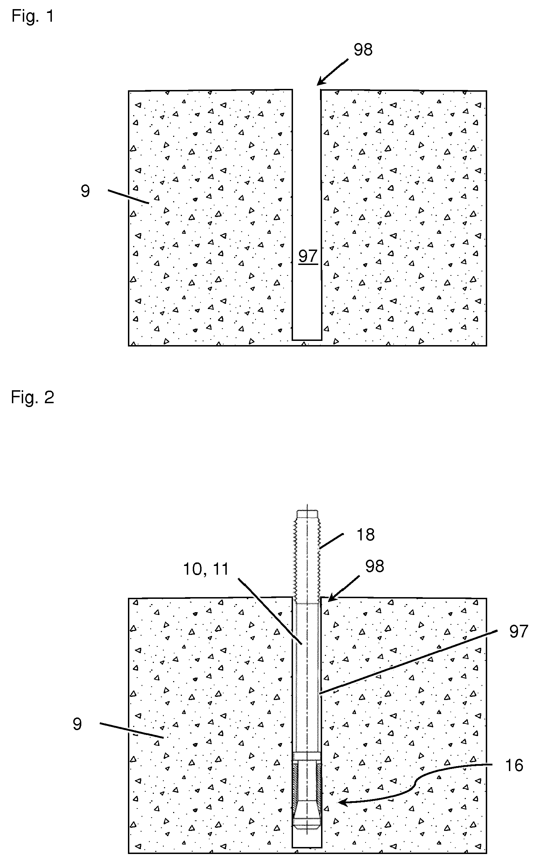

Die Figuren 2 bis 5 zeigen unter anderem einen Anker 10 mit einer Ankerstange 11. Der Anker 10 weist in einem vorderen Bereich einen Verankerungsbereich 16 zum Verankern der Ankerstange 11 in einem Substrat und in einem rückwärtigen Bereich einen Lasteinleitungsbereich 18 zum Einbringen von Zuglasten in die Ankerstange 11 auf. Im dargestellten Ausführungsbeispiel ist der Anker 10 als mechanischer Anker ausgebildet und weist im Verankerungsbereich 16 eine die Ankerstange 11 umgebende Spreizhülse und an der Ankerstange 11 einen Spreizkonus zum Anpressen der Spreizhülse an das umgebende Substrat bei Zug in der Ankerstange 11 auf. Aber auch alternativ ausgeführte mechanische oder auch chemische oder gemischt chemisch-mechanische Verankerungsbereiche 16 sind denkbar. Im dargestellten Ausführungsbeispiel weist die Ankerstange 11 im Lasteinleitungsbereich 18 ein Aussengewinde zum formschlüssigen Einleiten von Zugkräften in die Ankerstange 11 auf. Es sind aber auch alternative Lasteinleitungsbereiche 18 denkbar, beispielsweise Bajonettmechanismen oder Nagelköpfe.

Mit dem Anker 10 der Figuren 2 bis 5 zusammen kann das Einlageelement 20 der Figuren 6 bis 8 ein Ankerset bilden.

Aufeinanderfolgende Stadien bei einem Verfahren zum Setzen dieses Ankersets in einem mineralischen Substrat 9, so dass eine Befestigungsanordnung erhalten wird, sind in den Figuren 1 bis 5 gezeigt.

Wie Figur 1 zeigt, wird bei diesem Setzverfahren, vorzugsweise durch Bohren, zunächst ein Loch 97, insbesondere ein Sackloch, im mineralischen Substrat 9 bereitgestellt. Am Übergang zur Oberfläche 91 des mineralischen Substrats 9 weist das Loch 97 eine Mündung 98 auf.

Anschliessend wird, wie in Figur 2 gezeigt, der Anker 10 mit seinem Verankerungsbereich 16 voran von der Mündung 98 her in das Loch 97 eingeführt. Vorzugsweise kann der Anker 10 sogleich im Loch 97 vorverankert werden, insbesondere durch geringfügiges Zurückziehen der Ankerstange 11 aus dem Loch 97 heraus.

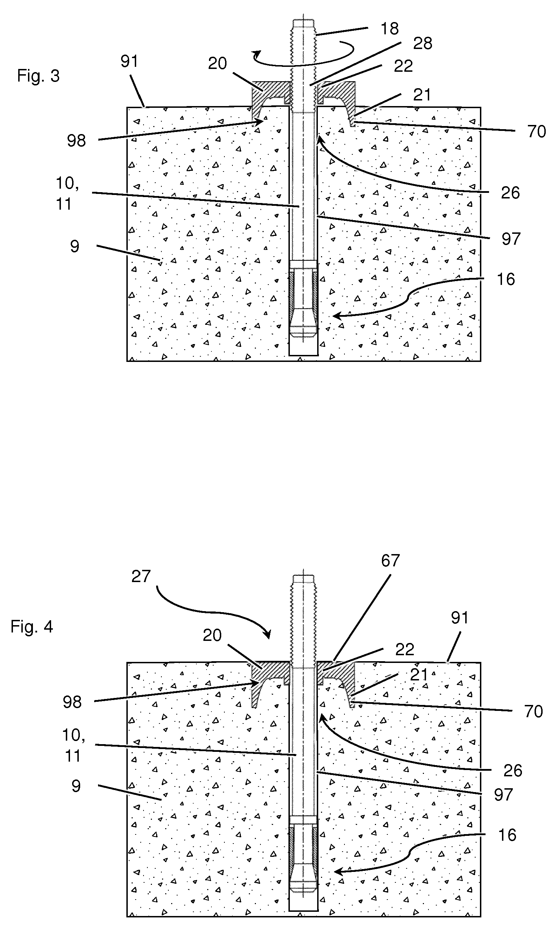

Anschliessend wird, wie in Figur 3 gezeigt, das Einlageelement 20 so auf die Ankerstange 11 aufgesteckt, dass die Vorderseite 26 des Einlageelements 20 zum Substrat 9 und/oder zum Verankerungsbereich 16 hin weist. Die Ankerstange 11 gelangt dabei in die Durchgangsöffnung 28 des Einlageelements 20. Wie in Figur 3 mit einem Pfeil angedeutet ist, wird das Einlageelement 20 in Drehung um seine Längsachse 99 versetzt und gleichzeitig, mit vorauseilender vorderer Stirnseite 66, an die das Loch 97 umgebende Oberfläche 91 des mineralischen Substrats 9 angepresst. Dies kann insbesondere durch ein nicht dargestelltes Setzwerkzeug erfolgen, welches mittels der Drehkupplung 30 drehfest mit dem Einlageelement 20 verbunden wird. Durch das Anpressen und die Drehung des Einlageelements 20 arbeitet das Einlageelement 20, insbesondere dessen Einsenkhülse 21, um das Loch 97 herum mineralisches Substrat 9 ab und dringt, unter Bildung einer ringförmigen Ausnehmung 70, in das mineralische Substrat 9 ein. Das Abarbeiten des mineralischen Substrats 9 kann vorzugsweise an den gegebenenfalls vorhandenen Schneiden 31 beziehungsweise 32 erfolgen. Das vom Einlageelement 20 abgearbeitete mineralische Substrat 9 kann insbesondere durch die Abführdurchgänge 25 hindurch nach aussen abgeführt werden. Im Inneren der ringförmigen Ausnehmung 70 wird vom Einlageelement 20 ein Substratzapfen freigestellt, der in der Aufnahme 29 aufgenommen wird.

Zunächst dringt nur die vorauseilende Einsenkhülse 21 in das mineralische Substrat 9 ein. Das Einlageelement 20 wird jedoch weiter in das mineralische Substrat 9 eingetrieben, bis auch die zurückversetzte Stützhülse 22 in das mineralische Substrat 9 gelangt und dort die Mündung 98 des Lochs 97 armiert. Wie Figur 4 zeigt, wird das Einlageelement 20 so weit eingetrieben, bis die rückwärtige Stirnseite 67 auf der Rückseite 27 des Einlageelements 20 etwa bündig mit der das Loch 97 umgebenden Oberfläche 91 des mineralischen Substrats 9 ist. Das Setzwerkzeug wird dann entfernt.

Wie Figur 5 zeigt, wird anschliessend ein zu verankerndes Anbauteil 7 auf die Ankerstange 11 des Ankers 10 aufgesteckt und das Anbauteil 7, beispielsweise durch eine auf den Lasteinleitungsbereich 18 aufgeschraubte Mutter 8, an der Ankerstange 11 gesichert. Wenn bei der derart erhaltenen Befestigungsanordnung Querlasten im Anbauteil 7 auftreten, welche die Ankerstange 11 zur Seite hin verbiegen, sorgt das Einlageelement 20 dafür, dass die Ankerstange 11 im Bereich der Mündung 98 des Lochs 97 nicht in unmittelbaren Kontakt mit dem mineralischen Substrat 9 gelangt. Die auf die Ankerstange 11 wirkenden Querkräfte werden also zunächst auf das Einlageelement 20 übertragen, das heisst im Bereich der Mündung 98 des Lochs 97 erfolgt die Querkraftübertragung zwischen Ankerstange 11 und mineralischem Substrat 9 mittelbar über das Einlageelement 20 hinweg. Das Einlageelement 20 lenkt die Spannungsspitzen ab und leitet die Kraft über eine größere Oberfläche in das umgebende mineralische Substrat 9, welches insbesondere ein Betonsubstrat sein kann, ein. Dadurch wird der Druck reduziert so dass die Betonfestigkeit erst bei deutlich gesteigerten Lasten überschritten wird. Insbesondere kann nach der Erfindung die Kraftübertragung zwischen Einlageelement 20 und mineralische Substrat 9 auch an dem in der Aufnahme 29 aufgenommenen Substratzapfen erfolgen, was die Kraftübertragung noch weiter homogenisiert.

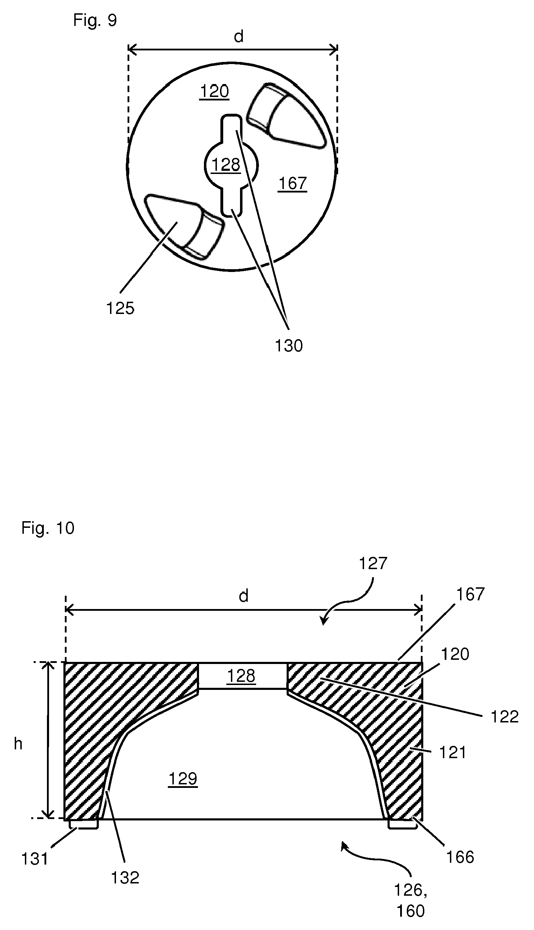

Die Figuren 9 und 10 zeigen eine zweite Ausführungsform eines Einlageelements 120. Ebenso wie das Einlageelement 20 der Figuren 6 bis 8 weist auch das Einlageelement 120 der Figuren 9 und 10 eine Rückseite 127 mit rückwärtiger Stirnseite 167 mit Abführdurchgängen 125 darin, eine Vorderseite 126 mit vorderer Stirnseite 166, eine Stützhülse 122 mit Durchgangsöffnung 128, eine Einsenkhülse 121 mit Aufnahme 129 mit offener Vorderseite 160 für den Substratzapfen, sowie Schneiden 131 und 132 auf. Im Hinblick auf diese Elemente kann daher zur Vermeidung von Wiederholungen auf die Beschreibung der Ausführungsform der Figur 6 bis 8 verwiesen werden.

Die Ausführungsform der Figuren 9 bis 8 unterscheidet sich von der Ausführungsform der Figuren 6 bis 8 zum einen durch die Ausgestaltung der Stützhülse 122. Im Gegensatz zur Stützhülse 22 der Figuren 6 bis 8 fehlt bei der Stützhülse 122 der Figuren 9 und 10 ein Kragen, das heisst die Stützhülse 122 steht nicht in die Aufnahme 129 für den Substratzapfen vor. Die Ausführungsform der Figuren 9 und 10 unterscheidet sich von der Ausführungsform der Figuren 6 bis 8 ferner durch die Ausgestaltung der Drehkupplung. Im Falle der Ausführungsform der Figuren 9 und 10 ist die Drehkupplung 130 zwar ebenfalls durch zwei Ausnehmungen in der rückwärtigen Stirnseite 167 gebildet, im Falle der Figuren 9 und 10 gehen diese die Drehkupplung 130 bildenden Ausnehmungen aber radial in die Durchgangsöffnung 128 der Stützhülse 122 über.

Auch das Einlageelement 120 der Figuren 9 und 10 kann mit dem Anker 10 der Figuren 2 bis 5 zusammen ein Ankerset bilden. Dieses Ankerset kann in Analogie zu dem in den Figuren 1 bis 5 beschriebenen Verfahren gesetzt werden, so dass insofern, zur Vermeidung von Wiederholungen, auf die obenstehenden Erläuterungen der Figuren 1 bis 5 verwiesen werden kann.

## Patentansprüche

1. Ankerset aufweisend einen Anker (10) mit einer Ankerstange (11) sowie ein Einlageelement (20; 120) zum Armieren einer Mündung (98) eines in einem mineralischen Substrat (9) angeordneten Lochs (97) für den Anker (10),
**dadurch gekennzeichnet,**
**dass** das Einlageelement (20; 120) eine Stützhülse (22; 122) zum Abstützen der Ankerstange (11) und eine mit der Stützhülse (22; 122) verbundene Einsenkhülse (21; 121) mit einer offenen Vorderseite (60; 160) zum Einsenken in das mineralische Substrat (9) und Aufnehmen eines Substratzapfens aufweist.

2. Ankerset nach Anspruch 1,
**dadurch gekennzeichnet,**
**dass** die Einsenkhülse (21; 121) und die Stützhülse (22; 122) monolithisch ausgeführt sind.

3. Ankerset nach einem der vorstehenden Ansprüche,
**dadurch gekennzeichnet,**
**dass** die Einsenkhülse (21; 121) und die Stützhülse (22; 122) in einem der offenen Vorderseite (60; 160) der Einsenkhülse (21; 121) abgewandten rückwärtigen Bereich der Einsenkhülse (21; 121) miteinander verbunden sind.

4. Ankerset nach einem der vorstehenden Ansprüche,
**dadurch gekennzeichnet,**
**dass** die Wandstärke der Einsenkhülse (21; 121) zur offenen Vorderseite (60; 160) der Einsenkhülse (21; 121) hin abnimmt,
**dass** der Innenquerschnitt der Einsenkhülse (21; 121) zur offenen Vorderseite (60; 160) der Einsenkhülse (21; 121) hin zunimmt, und/oder
**dass** die Einsenkhülse (21; 121) eine im Längsschnitt des Einlageelements (20; 120) konkave Innenoberfläche aufweist.

5. Ankerset nach einem der vorstehenden Ansprüche,
**dadurch gekennzeichnet,**
**dass** das Einlageelement (20; 120) zumindest eine Schneide (31, 32; 131; 132) zum Schneiden des mineralischen Substrats (9) aufweist,
wobei zumindest eine Schneide (32; 132) im Inneren der Einsenkhülse (21; 121) des Einlageelements (20; 120) und zumindest eine weitere Schneide (31; 131) an einer vorderen Stirnseite (66) des Einlageelements (20; 120) angeordnet ist.

6. Ankerset nach einem der vorstehenden Ansprüche,
**dadurch gekennzeichnet,**
**dass** das Einlageelement (20; 120) eine zylindrische Aussenoberfläche aufweist.

7. Ankerset nach einem der vorstehenden Ansprüche,
**dadurch gekennzeichnet,**
**dass** das Einlageelement (20; 120) zumindest einen Abführdurchgang (25; 125) zum Abführen von abgearbeitetem mineralischem Substrat (9) aus der Einsenkhülse (21; 121) aufweist.

8. Ankerset nach einem der vorstehenden Ansprüche,
**dadurch gekennzeichnet,**
**dass** das Einlageelement (20; 120) zumindest eine Drehkupplung (30; 130) zur drehfesten Kopplung des Einlageelements (20; 120) mit einem Setzwerkzeug aufweist.

9. Ankerset nach einem der vorstehenden Ansprüche,
**dadurch gekennzeichnet,**
**dass** der Aussendurchmesser (d) des Einlageelements (20; 120) grösser ist als seine Höhe (h).

10. Ankerset nach einem der vorstehenden Ansprüche,
**dadurch gekennzeichnet,**
**dass** das Einlageelement (20; 120) zumindest überwiegend aus einem Metallmaterial besteht.

11. Ankerset nach einem der vorstehenden Ansprüche,
**dadurch gekennzeichnet,**
**dass** die Ankerstange (11) durch die Stützhülse (22; 122) hindurchgeführt ist.

12. Einlageelement (20; 120) eines Ankersets nach einem der vorstehenden Ansprüche.

13. Befestigungsanordnung aufweisend ein Ankerset nach einem der Ansprüche 1 bis 11 und ein mineralisches Substrat (9), welches ein Loch (97) mit einer Mündung (98) aufweist,
- wobei die Ankerstange (11) im Loch (97) angeordnet und im Loch (97) verankert ist, und
- wobei das Einlageelement (20; 120) zumindest teilweise im mineralischen Substrat (9) eingesenkt ist und das Einlageelement (20; 120) dabei die Mündung (98) des Lochs (97) armiert.

14. Setzverfahren für ein Ankerset nach einem der Ansprüche 1 bis 11, bei dem
- in einem mineralischen Substrat (9) ein Loch (97) mit einer Mündung (98) vorgesehen wird,
- im mineralischen Substrat (9) eine ringförmige Ausnehmung (70) vorgesehen wird,
- die Einsenkhülse (21; 121) des Einlageelements (20; 120) zumindest bereichsweise in der ringförmigen Ausnehmung (70) angeordnet wird und die Stützhülse (22; 122) des Einlageelements (20; 120) an der Mündung des Lochs (97) angeordnet wird, so dass die Stützhülse (22; 122) des Einlageelements (20; 120) die Mündung (98) des Lochs (97) armiert, und
- die Ankerstange (11) in das Loch (97) eingeführt und im Loch (97) verankert wird.

15. Verfahren nach Anspruch 14,
**dadurch gekennzeichnet,**
**dass** zunächst die Ankerstange (11) in das Loch (97) eingeführt wird und anschliessend die Einsenkhülse (21; 121) des Einlageelements (20; 120) zumindest bereichsweise in der ringförmigen Ausnehmung (70) angeordnet wird.

16. Verfahren nach einem der Ansprüche 14 oder 15,
**dadurch gekennzeichnet,**
**dass** zumindest ein Teilbereich der ringförmigen Ausnehmung (70) durch Eindrehen des auf die Ankerstange (11) aufgesteckten Einlageelements (20; 120) in das Substrat (9) erzeugt wird.
